# EUROPEAN PATENT SPECIFICATION

(11) **EP 4 063 735 B1**
(45) Date of publication and mention of the grant of the patent: **09.10.2024**
(21) Application number: 21881349.1
(22) Date of filing: 15.04.2021
(51) Int. Cl.: F24C 3/10, F16K 5/02, F23K 5/14, F23K 5/00

(54) **PLUG VALVE AND GAS STOVE**
STOPFENVENTIL UND GASHERD
ROBINET À TOURNANT ET CUISINIÈRE À GAZ

(30) Priority: 01.02.2021 CN 202110139459
(43) Date of publication of application: 28.09.2022
(73) Proprietor: Foshan Shunde Midea Washing Appliances Manufacturing Co., Ltd., Foshan, Guangdong 528311 (CN)
(72) Inventor: QI, Zhengsheng, Foshan, Guangdong 528311 (CN)
(74) Representative: RGTH
(86) International application number: PCT/CN2021/087585
(87) International publication number: WO 2022/160470

(56) References cited:
- CN-A- 111 237 524
- CN-A- 111 396 586
- CN-U- 205 560 864
- CN-U- 208 431 814
- KR-A- 20070 090 702
- KR-A- 20160 059 644

## Description

### CROSS-REFERENCE TO RELATED APPLICATIONS

This application claims the priority of the Chinese patent application No. 202110139459.X, filed on February 1, 2021.

### TECHNICAL FIELD

The present application relates to the field of gas appliances, in particular to a plug valve and a gas stove.

### BACKGROUND

In the current gas stoves, the fire is adjusted by manually rotating the rotary knob on the gas stove, thus the manual operation is needed when the fire needs to be adjusted, which is troublesome. For example, in the cooking process such as gruel cooking and soup cooking, the user is generally not likely to stay in the kitchen. Since the cooking time is long, after the user leaves the kitchen, it is easy for the user to forget the time to adjust the fire or even forget the cooking, and therefore it is easy to burn the food or the like for the fire is always large. If the user is required to be stayed in the kitchen, it wastes the user's time to process other works, and it is inconvenient for the user to use.

KR 2007 0090702 A relates to an electric ball valve comprising a valve body, a ball closing and opening a flow passage, a gearmotor and a manual adjustment lever. When power is supplied from the gearmotor, the electric ball valve is automatically closed and opened with the power from the gearmotor; while when the power from the gearmotor is cut off, the electric ball valve can be closed and opened manually via the manual adjustment lever.

CN 111 237 524 A discloses a manual-automatic integrated valve, which comprises a valve body, a valve stem and an automatic clutch transmission box, wherein the automatic clutch transmission box comprising a motor, a clutch and driving gears. The manual-automatic integrated valve can be driven by the motor and therefore can be adjusted automatically, or the motor can be detached from the manual-automatic integrated valve via the clutch and the manual-automatic integrated valve can be adjusted manually via the valve stem.

### SUMMARY

The main purpose of the present application is to provide a plug valve, which aims to increase the selectivity for users, so as to be convenient for users to use.

In order to achieve the above purpose, the gas stove provided by the invention includes:
a valve seat;
a valve rod mounted on the valve seat;
a driving mechanism mounted on the valve seat and connected to the valve rod to drive the valve rod; and
a change-over switch mounted on the valve seat and electrically connected to the driving mechanism;
where the plug valve has an automatic fire control mode and a manual fire control mode, wherein in the automatic fire control mode, the driving mechanism is controlled to drive the valve rod (12) to rotate to adjust the firepower; and wherein in the manual fire control mode, the valve rod (12) is manually adjusted and rotated; when the valve rod is rotated to trigger the change-over switch, the plug valve is switched to the automatic fire control mode.

In some embodiments, the valve seat includes a valve body and a mounting seat, the valve rod being mounted on the valve body, and the change-over switch and the driving mechanism both being mounted on the mounting seat.

In this way, the mounting seat is added on the valve body for mounting the driving mechanism and the change-over switch, so that the structure of the valve body is simplified, which facilitates the forming of the valve body and reduces the cost of the valve body.

In some embodiments, the mounting seat is provided with a mounting hole, and the valve rod is extended to pass through the mounting hole and mounted on the valve body.

It is equivalent to making the mounting hole to be a positioning reference on the mounting seat, the positioning and mounting of the driving mechanism and the change-over switch can be facilitated, and the assembling precision of the driving mechanism and the change-over switch can be improved.

In some embodiments, a mounting convex ring is arranged on a periphery of the mounting hole, and the mounting convex ring is arranged around a periphery of the valve rod.

With such an arrangement, it is equivalent to increasing the length of the mounting hole, the deflection of the valve rod can be better limited, and the stability of the valve rod during rotation is improved.

In some embodiments, the mounting convex ring is provided with an avoidance hole, and the change-over switch is extended into the mounting convex ring via the avoidance hole to cooperate with the valve rod.

With such an arrangement, excessive reduction of the structure of the mounting convex ring can be avoided, the avoidance hole bring less influence on the structural strength of the mounting convex ring as compared with a notch does, thus the mounting convex ring keeps high structural strength.

In some embodiments, the plug valve includes an ignition switch, the installation convex ring is provided with an avoidance notch, and the ignition switch is extended into the mounting convex ring via the avoidance notch to cooperate with the valve rod.

In this way, the avoidance notch can be formed at the time of forming the mounting seat, so that the subsequent process of machining avoiding notch is avoided, and the production cost of the mounting seat is reduced.

In some embodiments, the avoidance notch and the avoidance hole are distributed on two opposite sides of the mounting convex ring.

As such, mutual interference between the ignition switch and the change-over switch on the mounting seat can be avoided, the valve rod can be prevented from interfering with the ignition switch and the change-over switch in cooperation, and the reliability of the plug valve is guaranteed.

In some embodiments, an outer circumferential ring of the valve rod is provided with a triggering groove, the ignition switch is a microswitch, and a pressing portion of the ignition switch is extended into the triggering groove, the ignition switch is triggered by an upper side wall of the triggering groove when the valve rod is pressed downwards.

As compared with the manner of providing an annular protrusion on the outer peripheral surface of the valve rod to trigger the ignition switch, this way can a radial size of the valve rod, thus reduce an occupied space of the valve rod and make the structure of the plug valve more compact.

In some embodiments, the mounting seat is provided with a first limiting groove, and the change-over switch is arranged in the first limiting groove; and/or the mounting seat is provided with a second limiting groove, and the ignition switch is arranged in the second limiting groove.

That is, when the change-over switch is installed in the first limiting groove, the first limiting groove can preliminarily limit the change-over switch, so that the number of screws used for fixing the change-over switch can be reduced, for example, the change-over switch can be stably installed on the mounting seat through a screw cooperating with the first limiting groove. When the ignition switch is installed in the second limiting groove, the second limiting groove can preliminarily limit the ignition switch, so that the number of screws used for fixing the ignition switch can be reduced, for example, the ignition switch can be stably installed on the mounting seat through a screw cooperating with the second limiting groove.

In some embodiments, the driving mechanism includes a motor arranged on the mounting seat, a transmission gear arranged on a rotating shaft of the motor and a connecting gear arranged on the valve rod, and the transmission gear is connected with the connecting gear to drive the connecting gear.

As such, the structure is simple, the transmission is reliable, and the cost of the plug valve can be reduced.

In some embodiments, the plug valve further includes a controller and a controlling switch, wherein, the controller is electrically connected to the controlling switch and the motor, the controlling switch is mounted on the mounting seat, the controlling switch is intermittently triggered by the transmission gear when the motor drives the transmission gear to rotate, and the controller calculates a rotation angle of the valve rod according to times of the controlling switch being triggered.

When being used by the user, the controller can control the motor to drive the valve rod to rotate according to a preset program, so that the firepower of the gas stove can be automatically adjusted. When the user uses the gas stove for cooking, the operation times of operating the gas stove can be reduced and manually adjusting the firepower of the gas stove can be reduce, so that it is more convenient for the user to use the gas stove for cooking, and the convenience of the user using the gas stove is greatly improved.

In some embodiments, the transmission gear includes a gear body, a transmission tooth section and a vacant section sequentially arranged in a circumferential direction of the gear body, the gear body is connected to the rotating shaft of the motor, when the motor drives the transmission gear to rotate, the transmission tooth section is intermittently meshed with the connecting gear, and in the manual fire control mode, the vacant section faces the connecting gear.

With such an arrangement, even if the motor is stuck or the power supply is disconnected, the gas stove can still be started by manually rotating the valve rod, and the situation that the gas stove cannot be normally used due to failure or power failure of the motor is avoided.

In some embodiments, the controlling switch is a microswitch arranged on a peripheral side of the transmission gear, when the motor drives the transmission gear to rotate, the controlling switch is intermittently triggered by the transmission tooth section.

By using the transmission tooth section to trigger the controlling switch, it can avoid that an additional trigger structure is arranged on the transmission gear, thus the structure of the transmission gear can be simplified, and the assembly processes of the plug valve can be reduced.

In some embodiments, the connecting gear is located at an end of the mounting convex ring on the mounting seat away from the valve body, the mounting seat is further provided with a supporting portion along a protruding direction of the mounting convex ring, the motor is fixed to a side of the supporting portion facing the valve body, the motor is extended to pass through the supporting portion, and the transmission gear is located on a surface of the supporting portion far away from the valve body, and meshed with the connecting gear.

In this way, the transmission gear and the connecting gear are substantially in the same plane, which not only ensures that the transmission gear and the connecting gear can be better engaged, but also reduces the length of the rotating shaft of the motor, the possibility of bending and deformation of the rotating shaft of the motor during the rotating of the transmission gear is reduced, so that the rotating stability of the connecting gear is better.

In some embodiments, the plug valve further includes: a wireless communication module communicates with an external terminal to receive a control instruction from the external terminal; and a controller electrically connected to the wireless communication module and the driving mechanism, and controls the driving mechanism to drive the valve rod to rotate according to the control instruction.

As such, when the user needs to adjust the firepower of the gas stove or to turn off the gas stove in the cooking process, the user only needs to send a corresponding control instruction to the gas stove through the external terminal, so that the user does not need to enter the kitchen to operate the gas stove. The user can conveniently adjust the firepower and turn off the fire of the gas stove, and the use convenience of the user is improved.

In some embodiments, the plug valve further includes a temperature sensor detects a temperature of a cooking utensil; and a controller electrically connected to the temperature sensor and the driving mechanism, and controls the driving mechanism to drive the valve rod to rotate according to the temperature.

When the automatic ignition mode is started, the temperature of the cooking utensil can be detected in real time through the temperature sensor, so that the controller can control the driving mechanism to drive the valve rod to the target firepower gear according to the preset program and the temperature, and the precision of the automatic fire control mode of the gas stove can be improved.

The present application further provides a gas stove. The gas stove includes a stove body and the above plug valve, the plug valve is arranged on the stove body.

According to the embodiments, the driving mechanism and the change-over switch are provided on the plug valve, and the driving mechanism is connected to the valve rod to drive the valve rod, so as to rotate the valve rod through the driving mechanism, so that the automatic fire control mode of adjusting firepower through the driving mechanism rotating the valve rod is added on the basis of manual fire control mode, thus the user can manually adjust the firepower or select the mode of automatically adjusting the firepower, the selectivity for the user is improved, and the user can conveniently switch and use in multiple cooking modes.

### BRIEF DESCRIPTION OF THE DRAWINGS

In order to more clearly explain the embodiments of the present application or the technical solutions in the related art, the drawings used in the description of the embodiments or the related art will be briefly introduced below. Obviously, the drawings in the following description are merely some embodiments of the present application. For those of ordinary skill in the art, other drawings can be obtained based on the structure shown in these drawings without creative work.
FIG. 1 is a schematic structural view of a plug valve according to an embodiment of the present application;
FIG. 2 is an exploded view of the plug valve of FIG. 1;
FIG. 3 is a schematic structural view of a mounting seat in FIG. 2;
FIG. 4 is a schematic structural view of a valve rod in FIG. 2;
FIG. 5 is a structural schematic view of a transmission gear and a connecting gear in FIG. 2;
FIG. 6 is a structural view of the transmission gear and the connecting gear in another embodiment of the plug valve of the present application.

Description of reference numerals in the figures:

| Reference numeral | Name | Reference numeral | Name |
|---|---|---|---|
| 10 | Plug valve | 121 | Triggering slot |
| 11 | Valve seat | 122 | Notch |
| 110 | Valve body | 13 | Ignition switch |
| 111 | Mounting seat | 14 | Change-over switch |
| 112 | Mounting convex ring | 15 | Controlling switch |
| 113 | Avoidance notch | 21 | Motor |
| 114 | Avoidance hole | 22 | Transmission gear |
| 115 | First limiting groove | 221 | Gear body |
| 116 | Second limiting groove | 222 | Transmission section |
| 117 | First positioning post | 223 | Meshing tooth |
| 118 | Second positioning post | 224 | Vacant section |
| 119 | Supporting portion | 23 | Connecting gear |
| 12 | Valve rod | | |

The realization of the purposes, functional features and advantages of the present application will be further explained with reference to the accompanying drawings in combination with the embodiments.

### DETAILED DESCRIPTION OF THE EMBODIMENTS

In the following, the embodiments of the present application will be clearly and completely described with reference to the drawings in the embodiments of the present application. Obviously, the described embodiments are only some of the embodiments of the present application, and not all of the embodiments. Based on the embodiments of the present application, all other embodiments obtained by those of ordinary skilled in the art without creative efforts shall fall within the claimed scope of the present application.

It should be noted that all directional indicators (such as up, down, left, right, front, back, etc.) in the embodiments of the present application are only used to explain the relative positional relationship, movement situation, etc. between components in a specific attitude (as shown in the drawings). If the specific attitude changes, the directional indication also changes accordingly.

In addition, the descriptions related to "first", "second" and the like in the present application are for descriptive purposes only, and should not be understood as indicating or implying their relative importance or implicitly indicating the number of technical features indicated. Therefore, a feature defined by "first" and "second" may explicitly or implicitly include at least one of such feature. In addition, the meaning of "and/or" in the full text includes three parallel solutions, taking "A and/or B" as an example, it includes solution A, solution B, or both solutions A and B. The various embodiments can be combined with each other, but the combination must be based on what can be achieved by those of ordinary skill in the art. When the combination of the embodiments is contradictory or cannot be achieved, it should be considered that such a combination does not exist, or is not within the scope of the claims of the present application.

The present application provides a plug valve applied in a gas stove.

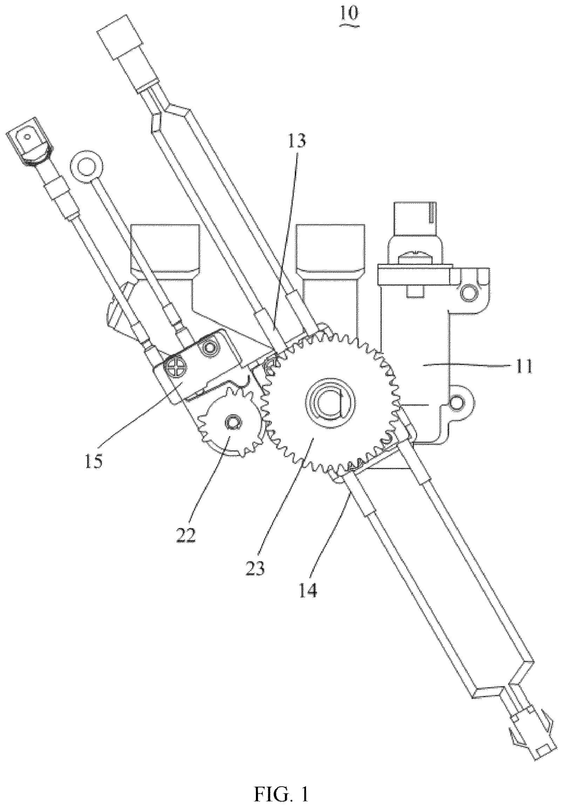

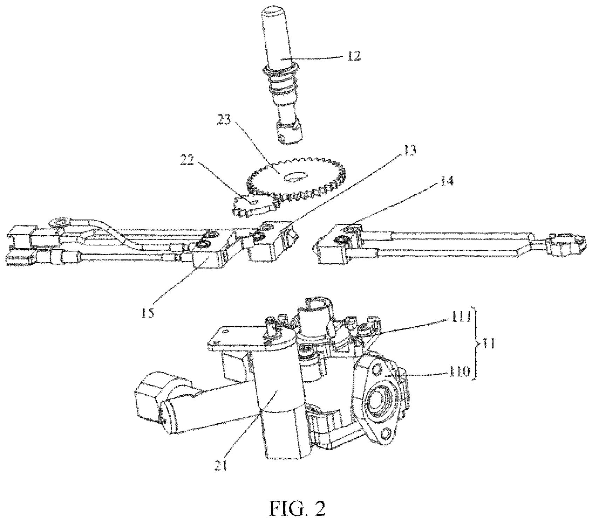

In the embodiment of the present application, referring to FIG. 1 and FIG. 2, the plug valve 10 includes a valve seat 11, a valve rod 12, a driving mechanism and a change-over switch 14. The valve rod 12 is mounted on the valve seat 11. The driving mechanism is mounted on the valve seat 11. The driving mechanism is connected to the valve rod 12 to drive the valve rod 12. The change-over switch 14 is mounted on the valve seat 11 and electrically connected to the driving mechanism. The plug valve 10 has an automatic fire control mode and a manual fire control mode. When the change-over switch 14 is triggered by rotating the valve rod 12, the plug valve 10 is switched to the automatic fire control mode.

In the present embodiment, the plug valve 10 further includes a controller. The controller is electrically connected to the change-over switch 14 and the driving mechanism. The plug valve 10 has a closing gear and a preset firepower gear after rotating a preset angle. When the valve rod 12 rotates to the preset firepower gear, the valve rod 12 triggers the change-over switch 14, so that the plug valve 10 is switched to the automatic fire control mode. In the automatic fire control mode, the driving mechanism can be controlled to drive the valve rod 12 to rotate to adjust the firepower.

In some embodiments, when the valve rod 12 rotates from the closing gear to the preset firepower gear, ignition is achieved, for example, the ignition process can be completed when the valve rod 12 rotates away from the closing gear. When the valve rod 12 is rotated to the preset firepower gear and triggers the change-over switch 14, the controller can detect that the change-over switch 14 is triggered, switch the plug valve 10 to the automatic fire control mode, and then control the driving mechanism to drive the valve rod 12 to rotate to a target firepower gear according to a preset program, so that the function of automatically adjusting the firepower is achieved.

The valve rod 12 can be manually adjusted and rotated to the preset firepower gear, or a starting instruction can be sent to the controller through an external terminal, and the controller controls the driving mechanism to rotate the valve rod 12 to the preset firepower gear. In addition, manual operation can be applied to complete the ignition, or electric control can be applied to complete the ignition. Of course, in other embodiments, the plug valve 10 may not be provided with a controller.

According to the embodiments, the driving mechanism and the change-over switch 14 are provided on the plug valve 10, and the driving mechanism is connected to the valve rod 12 to drive the valve rod 12, so as to rotate the valve rod 12 through the driving mechanism, so that the automatic fire control mode of adjusting firepower through the driving mechanism rotating the valve rod 12 is added on the basis of manual fire control mode. thus the user can manually adjust the firepower or select the mode of automatically adjusting the firepower, the selectivity for the user is improved, and the user can conveniently switch and use in multiple cooking modes.

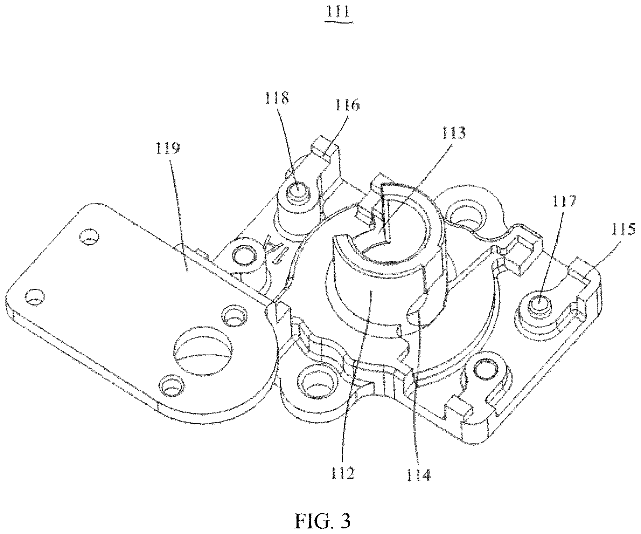

With reference to FIGS. 2 and 3, in an embodiment, the valve seat 11 includes a valve body 110 and a mounting seat 111. The valve rod 12 is mounted on the valve body 110. The change-over switch 14 and the driving mechanism are both mounted on the mounting seat 111. Since the valve body 110 needs to be provided with a gas channel and the like, the structure of the valve body 110 is relatively complex, by arranging the mounting seat 111 on the valve body 110 to mount the driving mechanism and the change-over switch 14, the structure of the valve body 110 is simplified, the valve body 110 is conveniently manufactured and molded, and the cost of the valve body 110 is reduced. The mounting seat 111 can be detachably connected to the valve body 110, for example, the mounting seat 111 can be fixed to the valve body 110 by means of screws, or the mounting seat 111 can be welded to the valve body 110, etc. Of course, in other embodiments, the change-over switch 14 and the driving mechanism can be mounted on the valve body 110.

In one embodiment, the mounting seat 111 is provided with a mounting hole, and the valve rod 12 is passed through the mounting hole and mounted on the valve body 110 through the mounting hole. In some embodiments, the driving mechanism and the change-over switch 14 both need to cooperate with the valve rod 12, by providing a mounting hole o the mounting seat and passing the valve rod 12 through the mounting hole, the mounting hole is used as a positioning reference on the mounting seat 111, so that positioning and mounting of the driving mechanism and the change-over switch 14 can be facilitated, and the assembling precision of the driving mechanism and the change-over switch 14 can be improved. Of course, in other embodiments, the mounting seat 111 can be disposed beside the valve rod 12.

In one embodiment, the mounting seat 111 is provided with a mounting convex ring 112 at a periphery of the mounting hole. The mounting convex ring 112 is annularly sleeved on the valve rod 12. In some embodiments, the mounting convex ring 112 is provided on a surface of the mounting seat 111 facing away from the valve body 110, and the valve rod 12 partially extends into the mounting convex ring 112, so that it is equivalent to increasing a length of the mounting hole, which can better limit the deflection of the valve rod 12 and improve the stability of the valve rod 12 during rotation. Of course, in other embodiments, it is possible not to provide the mounting convex ring 112.

In one embodiment, the plug valve 10 includes an ignition switch 13. The mounting convex ring 112 is provided with an avoidance notch 113. The ignition switch 13 is extended into the mounting convex ring 112 from the avoidance notch 113 to cooperate with the valve rod 12. In some embodiments, the mounting convex ring 112 and the mounting seat 111 are integrally formed, and the avoiding notch 113 is extended and pierces through an end surface of the mounting convex ring 112, so that when the mounting seat 111 is formed, the avoiding notch 113 can be formed at the same time, and the subsequent process of forming the avoidance notch 113 is avoided, to reduce the production cost of the mounting seat 111. Of course, in other embodiments, an avoidance through hole can be provided on the mounting convex ring 112, and the ignition switch 13 is extended into the mounting convex ring 112 from the avoidance through hole to cooperate with the valve rod 12.

In one embodiment, the mounting convex ring 112 is provided with an avoidance hole 114, and the change-over switch 14 is extended into the mounting convex ring 112 from the avoiding hole 114 to cooperate with the valve rod 12. In some embodiments, the avoidance hole 114 is spaced from the avoidance notch 113, and the avoidance hole 114 is spaced from the end surface of the mounting convex ring 112, so that the structure of the mounting convex ring 112 can be prevented from being reduced, and compared with the manner of providing a notch 122, the avoidance hole 114 has less influence on the structural strength of the mounting convex ring 112, so that the mounting convex ring 112 maintains a higher structural strength. Of course, in other embodiments, the mounting convex ring 112 can be provided with the avoidance notch 122, and the change-over switch 14 is extended into the mounting convex ring 112 from the avoidance notch 122 to cooperate with the valve rod 12.

In one embodiment, the avoidance notch 113 and the avoidance hole 114 are located on two opposite sides of the mounting convex ring 112. That is, the change-over switch 14 and the ignition switch 13 are arranged on the two opposite sides of the mounting convex ring 112, so that mutual interference between the ignition switch 13 and the change-over switch 14 on the mounting seat 111 can be avoided, the valve rod 12 can be prevented from interfering with the ignition switch 13 and the change-over switch 14 respectively, and the reliability of the plug valve 10 is ensured. Of course, in other embodiments, the avoidance notch 113 and the avoidance hole 114 can be provided on the same side of the mounting convex ring 112, etc.

In one embodiment, the ignition switch 13 is a microswitch. In some embodiments, the ignition switch 13 can be a normally closed microswitch or a normally open microswitch, so that the structure is simple, and the structure of the plug valve 10 is simplified. Of course, in other embodiments, the ignition switch 13 can be a photoelectric sensor or a Hall sensor, etc.

Referring to FIG. 2 to FIG. 4, in an embodiment, a triggering groove 121 is provided around an outer peripheral surface of the valve rod 12. A pressing portion of the ignition switch 13 is extended into the triggering groove 121 so that an upper side wall of the triggering groove 121 triggers the ignition switch 13 when the valve rod 12 is pressed downwards. Such manner can reduce a radial size of the valve rod 12, thus reduce an occupied space of the valve rod 12 and make the structure of the plug valve 10 more compact, as compared with the manner of providing an annular protrusion on the outer peripheral surface of the valve rod 12 to trigger the ignition switch 13. Of course, in other embodiments, the annular protrusion can be provided on the outer peripheral surface of the valve rod 12 to trigger the ignition switch 13.

In one embodiment, the change-over switch 14 is a microswitch. In some embodiments, the change-over switch 14 can be a normally closed microswitch or a normally open microswitch. The valve rod 12 is provided with the notch 122, a pressing portion of the change-over switch 14 abuts against the outer peripheral surface of the valve rod 12 when the valve rod 12 rotates from the closed gear to the preset firepower gear, and makes the change-over switch 14 be in a turn-on state. when the valve rod 12 is rotated to the preset firepower gear, the pressing portion of the change-over switch 14 is located in the notch 122 to make the change-over switch 14 switch from the turn-on state to a turn-off state. That is, when the valve rod 12 is rotated to the preset firepower gear, the state of the change-over switch 14 changes, so that a trigger signal is generated. When the controller detects the trigger signal generated by the change-over switch 14, the automatic fire control mode is started. As such, the structure is simple, and the structure of the valve rod 12 and the structure of the plug valve 10 can be simplified. Certainly, in other embodiments, a convex portion can be provided on the outer peripheral surface of the valve rod 12. When the valve rod 12 is rotated to the preset firepower gear, the change-over switch 14 switches from the turn-off state to the turn-on state. In addition, the change-over switch 14 can be a photoelectric sensor or a Hall sensor, or the like.

The fixing manners of fixing the change-over switch 14 are various, for example, in one embodiment, the change-over switch 14 is fixed to the mounting seat 111 by means of screws, as such the structure is simple, and the fixing is stable. In other embodiments, an engagement structure can be provided on the mounting seat 111, and the change-over switch 14 is engaged to the mounting seat 111 by the engagement structure.

In one embodiment, the mounting seat 111 is provided with a first limiting groove 115, and the change-over switch 14 is arranged in the first limiting groove 115. In some embodiments, the first limiting groove 115 can limit the change-over switch 14 to rotate on the mounting seat 111, that is, when the change-over switch 14 is installed in the first limiting groove 115, the first limiting groove 115 can preliminarily limit the change-over switch 14, so that the number of screws used for fixing the change-over switch 14 can be reduced, for example, the change-over switch 14 can be stably installed on the mounting seat 111 through one screw cooperating with the first limiting groove 115. Of course, in other embodiments, the first limiting groove 115 can be omitted, and the change-over switch 14 is fixed to the mounting seat 111 through at least two screws.

In one embodiment, the mounting seat 111 is provided with a first positioning post 117, and the change-over switch 14 is provided with a first positioning hole. When the change-over switch 14 is mounted on the mounting seat 111, the first positioning post 117 is inserted in the first positioning hole, so that the change-over switch 14 can be positioned, and the change-over switch 14 can also be prevented to translate on the mounting seat 111. In the embodiment where the first limiting groove 115 is provided, the first positioning post 117 can be disposed in the first limiting groove 115.

The fixing manners of fixing the ignition switch 13 are various, for example, in one embodiment, the ignition switch 13 is fixed to the mounting seat 111 by screws, as such the structure is simple, and the fixing is stable. In other embodiments, an engagement structure can be provided on the mounting seat 111, and the ignition switch 13 is engaged to the mounting seat 111 by the clamping structure.

In one embodiment, the mounting seat 111 is provided with a second limiting groove 116, and the ignition switch 13 is arranged in the second limiting groove 116. In some embodiments, the second limiting groove 116 can limit the ignition switch 13 to rotate on the mounting seat 111, that is, when the ignition switch 13 is installed in the second limiting groove 116, the second limiting groove 116 can preliminarily limit the ignition switch 13, so that the number of screws used for fixing the ignition switch 13 can be reduced, for example, the ignition switch 13 can be stably installed on the mounting seat 111 through a screw cooperating with the second limiting groove 116. Of course, in other embodiments, the second limiting groove 116 can be omitted, and the ignition switch 13 is fixed to the mounting seat 111 by at least two screws.

In one embodiment, the mounting seat 111 is provided with a second positioning post 118, and the ignition switch 13 is provided with a second positioning hole. When the ignition switch 13 is mounted on the mounting seat 111, the second positioning post 118 is inserted in the second positioning hole, so that the ignition switch 13 can be positioned, and the ignition switch 13 can also be prevented to translate on the mounting seat 111. In the embodiment where the second limiting groove 116 is provided, the second positioning post 118 can be disposed in the second limiting groove 116.

In one embodiment, the preset firepower gear is the minimum firepower gear. In the embodiment, when the valve rod 12 rotates from the closing gear to the minimum firepower gear, the valve rod 12 rotates anticlockwise, and the minimum firepower gear is the maximum angle of rotation of the valve rod 12. Therefore, when the preset firepower gear is the minimum firepower gear, the user can conveniently determine the position of the preset firepower gear, so that the user can manually rotate the valve rod 12 to the preset firepower gear. In addition, when the automatic fire control mode is started, the motor 21 may not drive the valve rod 12 to rotate to the target firepower gear immediately, at this time, if the preset firepower gear is a gear with a larger firepower, the temperature of the cooking utensil can be rapidly increased, and the food in the cooking utensil is burnt. By setting the preset firepower gear to be the minimum firepower gear, the heating speed of the cooking utensil can be slowed down, and the risk that the food in the cooking utensil is burnt due to rapid temperature rise is reduced. Of course, in other embodiments, the preset firepower gear can be another firepower gear.

In one embodiment, the driving mechanism includes a motor 21 provided on the mounting seat 111, a transmission gear 22 provided on a rotating shaft of the motor 21, and a connecting gear 23 provided on the valve rod 12. The transmission gear 22 is in transmission connection with the connecting gear 23. Therefore, the structure is simple, the transmission is reliable, and the cost of the plug valve 10 can be reduced. Of course, in other embodiments, another transmission mode can be used.

With reference to FIGS. 1 and 2, in an embodiment, the plug valve 10 further includes a controlling switch 15, the controller is electrically connected to the controlling switch 15 and the motor 21, and the controlling switch 15 is mounted on the mounting seat 111. When the motor 21 drives the transmission gear 22 to rotate, the transmission gear 22 intermittently triggers the controlling switch 15. The controller is configured for calculating a rotation angle of the valve rod 12 according to the number of times the controlling switch 15 is triggered. In some embodiments, when the controller controls the motor 21 to drive the transmission gear 22 to rotate in a first direction, the transmission gear 22 triggers the controlling switch 15 one time, and the firepower gear of the plug valve 10 is increased by one gear. When the controller controls the motor 21 to drive the transmission gear 22 to rotate in a second direction, the transmission gear 22 triggers the controlling switch 15 one time, and the firepower gear of the plug valve 10 is reduced by one gear. The first direction is opposite to the second direction. That is, the first direction and the second direction are opposite circumferential directions, and the following description takes the first direction being the anticlockwise direction as an example, but is not limited thereto. When the first direction is the counterclockwise direction, the second direction is the clockwise direction.

In the automatic fire control mode, the controller can control the motor 21 to drive the transmission gear 22 to rotate, so that the transmission gear 22 drives the connecting gear 23 and the valve rod 12 to rotate. When the controller controls the motor 21 to drive the transmission gear 22 to rotate in the first direction, the transmission gear 22 triggers the controlling switch 15 once, that is, the valve rod 12 is rotated for a certain angle, so that the firepower gear of the plug valve 10 is increased by one gear. When the controller controls the motor 21 to drive the transmission gear 22 to rotate in the second direction, the transmission gear 22 triggers the controlling switch 15 once, that is, the valve rod 12 is rotated in the opposite direction for a certain angle, so that the firepower gear of the plug valve 10 is reduced by one gear. Under the driving of the motor 21, the valve rod 12 rotates to the minimum firepower gear in the second direction, and the controller controls the motor 21 to stop rotating. That is, during the automatic fire control process, the valve rod 12 rotates between the maximum firepower gear and the minimum firepower gear. Since the transmission gear 22 cannot be displaced, and the controlling switch 15 is triggered by the rotation of the transmission gear 22, the accuracy of detecting the controlling switch 15 can be ensured, and the accuracy of the automatic fire control mode is ensured.

Therefore, when the controller controls the motor 21 to drive the transmission gear 22 to rotate, the transmission gear 22 can intermittently trigger the controlling switch 15, and the controller can determine the firepower gear corresponding to the rotation of the valve rod 12 according to the rotation direction of the motor 21 and the trigger times of the controlling switch 15. That is, when being used by the user, the controller can control the motor 21 to drive the valve rod 12 to rotate according to a preset program, so that the firepower of the gas stove can be automatically adjusted. When the user uses the gas stove for cooking, the operation times of operating the gas stove can be reduced and manually adjusting the firepower of the gas stove can be reduce, so that it is more convenient for the user to use the gas stove for cooking, and the convenience of the user using the gas stove is greatly improved.

In addition, if the firepower is determined according to the rotating steps of the motor 21, for being limited by an operation speed of a single-chip microcomputer, the single-chip microcomputer controls the generation of the stepping pulse of the step motor 21 by using a timer, for being limited by a time resolution of the timer, the operation speed adjustment of the step motor 21 is discrete, causing the torques of the speeds to be discrete, furthermore, because of the inertia and the torque, the step-out phenomenon easily occurs. and the motor 21 is difficult to rotate according to a preset number of steps, thus the control precision is poor, and the practicability is poor. Compared with the mode of determining the firepower according to the number of rotating steps of the motor 21, the problem of poor practicability caused by the fact that the stepping motor 21 is easy to lose steps or cannot rotate according to the preset step number can be avoided, and meanwhile, the motor 21 can be a step motor 21 or be a direct current motor 21, the limitation is small, and flexible configuration can be achieved.

According to the embodiments, electric control mechanisms such as the motor 21, the connecting gear 23 and the transmission gear 22 can be added on the basis of the conventional plug valve 10, no additional gas pipeline structure is needed, the difficulty of the installation process and the air leakage risk are reduced, and the original installation process and the gas path installation process of the gas stove are not affected. The gas stove of the embodiments is consistent with the commonly used gas stove with a small bottom shell, so that when a user adopts the gas stove of this solution, the installation hole of installating the gas stove does not need to be enlarged, the resistance of the customer to replace the gas stove is reduced, the sale hurdle of the gas stove is reduced, and the market competitiveness is improved.

In one embodiment, the minimum firepower gear corresponds to a position where the valve rod 12 is rotated anticlockwise for 270 degrees from the closed gear, and the maximum firepower gear of the gas stove corresponds to a position where the valve rod 12 is rotated anticlockwise for 90 degrees or 180 degrees from the closed gear. In this way, more firepower gears can be arranged between the minimum firepower gear and the maximum firepower gear, and the firepower adjustment precision can be improved. Of course, in other embodiments, the minimum firepower gear and the maximum firepower gear can also correspond to other positions.

With reference to FIG. 1, FIG. 2 and FIG. 5, in an embodiment, the transmission gear 22 includes a gear body 221, and a transmission tooth section 222 and a vacant section 224 which are sequentially arranged in a circumferential direction of the gear body 221, the gear body 221 is connected to a rotating shaft of the motor 21. When in the automatic fire control mode, the motor 21 drives the transmission gear 22 to rotate, the transmission tooth section 222 is intermittently engaged with the connecting gear 23. When in the manual fire control mode, the vacant section 224 faces the connecting gear 23. In some embodiments, the transmission tooth section 222 is provided with meshing teeth 223, so that in the automatic fire control mode, the meshing teeth 223 can meshed with the connecting gear 23 to drive the connecting gear 23 to rotate. The vacant section has no meshing teeth 223. When the vacant section 224 faces the connecting gear 23, the connecting gear 23 is spaced from the meshing teeth 223 of the transmission tooth section 222, so that the transmission gear 22 and the connecting gear 23 are independent from each other. That is, in the automatic fire control mode, when the transmission gear 22 rotates to make the transmission tooth section 222 mesh with the connecting gear 23, the connecting gear 23 can be driven to rotate, and when the transmission gear 22 rotates to make the vacant section 224 face the connecting gear 23, the transmission gear 22 does not drive the connecting gear 23 to rotate.

Therefore, in the automatic fire control mode, when the transmission gear 22 is driven to rotate continuously by the motor 21, the transmission tooth section 222 can intermittently mesh with the connecting gear 23 to drive the connecting gear 23 and the valve rod 12 to rotate, so as to electrically control the valve rod 12 to rotate to adjust the firepower. In addition, when the transmission gear 22 is driven by the motor 21 to rotate the vacant section 224 to face the connecting gear 23, the motor 21 is controlled to stop rotating, so that the transmission gear 22 maintains the state of the vacant section 224 facing the connecting gear 23. When the valve rod 12 is manually rotated, mutual interference between the transmission gear 22 and the connecting gear 23 can be avoided, it is ensured that the valve rod 12 rotates smoothly, and the situation that the torque is increased due to the fact that the transmission gear 22 is driven to rotate when manually rotating valve rod 12 is avoided. Even if the motor 21 is stuck or the power supply is disconnected, the gas stove can still be started by manually rotating the valve rod 12, and the situation that the gas stove cannot be normally used due to failure or power failure of the motor 21 is avoided. That is, the plug valve 10 in the present solution can automatically adjust the firepower by electrically rotating the valve rod 12, and can also avoid the situation that the gas stove cannot be normally used due to failure or power failure of the motor 21. Of course, in other embodiments, the controlling switch 15 can be a photoelectric sensor or a Hall sensor. In addition, the transmission gear 22 may not be provided with the vacant section 224.

In one embodiment, the controlling switch 15 is a microswitch and is arranged on the peripheral side of the transmission gear 22. When the motor 21 drives the transmission gear 22 to rotate, the transmission tooth section 222 intermittently triggers the controlling switch 15, that is, the meshing teeth 223 of the transmission tooth section 222 can trigger the controlling switch 15. Therefore, it can avoid that an additional trigger structure is arranged on the transmission gear 22, thus the structure of the transmission gear 22 can be simplified, and the assembly processes of the plug valve 10 can be reduced. Of course, in other embodiments, an additional trigger structure for triggering the controlling switch 15 can be arranged on the transmission gear 22. At this time, there can be one or more trigger structures on the transmission gear 22, when there are a plurality of trigger structures, the plurality of trigger structures are distributed at intervals along the circumferential direction of the transmission gear 22.

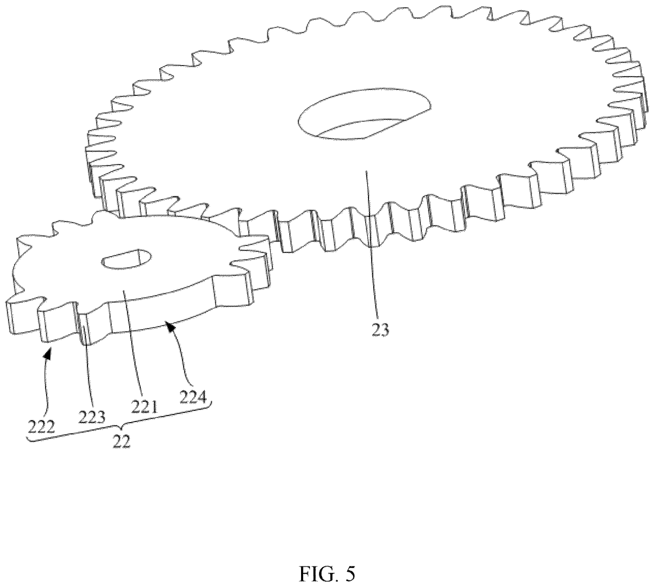

Please refer to FIG. 2 and FIG. 5, the transmission gear 22 has a variety of structures. For example, in one embodiment, the transmission gear 22 includes multiple transmission tooth sections 222 and multiple vacant sections 224, the transmission tooth sections 222 and the vacant sections 224 are alternately distributed in the circumferential direction of the gear body 221. That is, at least two transmission tooth sections 222 and at least two vacant sections 224 are provided in the transmission gear 22, which is equivalent to that a plurality of transmission tooth sections 222 are arranged on the gear body 221. The plurality of transmission tooth sections 222 are distributed at intervals along the circumferential direction of the gear body 221, and a vacant section 224 is formed between two adjacent transmission tooth sections 222 along the circumferential direction of the gear body 221. When the vacant section 224 faces the connecting gear 23, the connecting gear 23 is spaced from the meshing teeth 223 of the transmission tooth sections 222. The number of the transmission tooth sections 222 can be two, three, four, five or more, or the like.

By arranging a plurality of transmission tooth sections 222, when the transmission gear 22 rotates for one circle, the connecting gear 23 and the valve rod 12 can be driven to rotate multiple times, so that the rotation angle of the valve rod 12 driven by the motor 21 driving the transmission gear 22 to rotate for one circle is larger, so that the rotating speed of the valve rod 12 is larger, and the valve rod 12 can be rapidly rotated to the target firepower gear. Moreover, it is equivalent to reducing the length of the vacant sections 224 in the circumferential direction of the gear body 221, so that when it is ensured that the connecting gear 23 and the transmission tooth section 222 do not interfere with each other in the automatic fire control mode, the time occupied by the idle state of the transmission gear 22 (the state that the transmission tooth sections 222 do not mesh with the connecting gear 23 during the continuous rotation of the transmission gear 22) is reduced. Energy waste in the idle state of the transmission gear 22 can be reduced, and energy can be saved. In the embodiment of triggering the controlling switch 15 through the transmission tooth section(s) 222, when the transmission gear 22 rotates the same angle, a plurality of transmission tooth sections 22 can increase the number of triggering times of the controlling switch 15, so that the firepower adjustment is more accurate. In order to ensure the accuracy of controlling the rotation of the valve rod 12, in one embodiment, the plurality of transmission tooth sections 222 are uniformly distributed at intervals in the circumferential direction of the gear body 221, and the plurality of vacant sections 224 are uniformly distributed at intervals in the circumferential direction of the gear body 221.

In another embodiment, the transmission gear 22 includes one transmission tooth section 222 and one vacant section 224, that is, the transmission tooth section 222 and the vacant section 224 are sequentially arranged in the circumferential direction of the gear body 221, so that the structure of the transmission gear 22 is relatively simple. Arc lengths of the transmission tooth section 222 and the vacant section 224 in the circumferential direction of the gear body 221 can be the same or different.

In one embodiment, the transmission tooth section 222 is provided with a plurality of meshing teeth 223, the plurality of meshing teeth 223 are sequentially distributed along the circumferential direction of the gear body 221, and each meshing tooth 223 of the same transmission tooth section 222 is sequentially meshed with the connecting gear 23. That is, each transmission tooth section 222 is provided with at least two meshing teeth 223, when the transmission gear 22 rotates to make the transmission tooth section 222 mesh with the connecting gear 23, the transmission gear 22 rotates the connecting gear 23 and the valve rod 12 for a larger angle, so that the rotation angle of the valve rod 12 driven through that the motor 21 drives the transmission gear 22 to rotate for one circle is larger, the rotating speed of the valve rod 12 is larger, and the valve rod 12 can be quickly rotated to the target firepower gear. The number of the meshing teeth 223 of the transmission tooth section 222 can be two, three, four or more, or the like.

In another embodiment, the transmission tooth section 222 can be provided with only one meshing tooth 223, this arrangement can make the structure of the transmission gear 22 relatively simple.

In one embodiment, the connecting gear 23 and the transmission gear 22 are both cylindrical gears. In this embodiment, the connecting gear 23 and the transmission gear 22 are both straight spur gears, but it's not limited thereto, in other embodiments, the connecting gear 23 and the transmission gear 22 can be helical spur gears or other types of cylindrical gears. When the connecting gear 23 and the transmission gear 22 are both cylindrical gears, the structures of the connecting gear 23 and the transmission gear 22 are relatively simple, which is beneficial to reducing the assembly difficulty and the production cost.

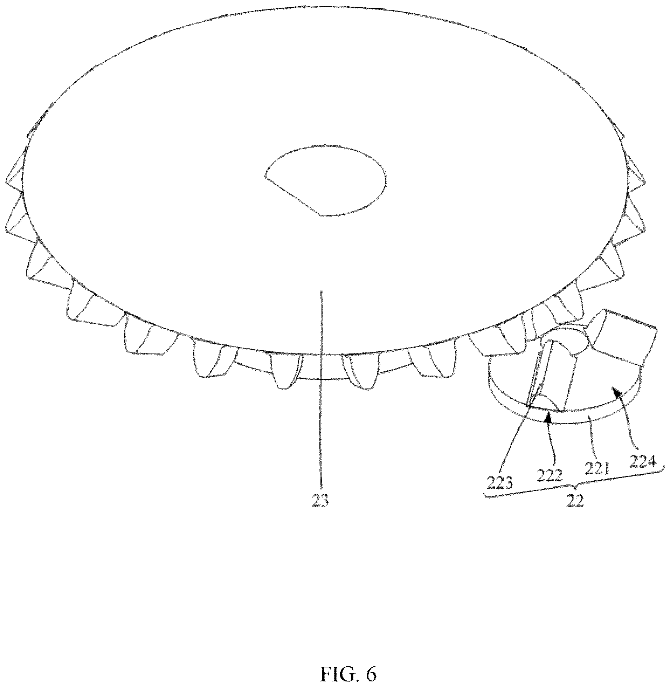

In addition, referring to FIG. 6, in another embodiment, both the connecting gear 23 and the transmission gear 22 are bevel gears. In this embodiment, the connecting gear 23 and the transmission gear 22 are both straight bevel gears. However, in other embodiments, the connecting gear 23 and the transmission gear 22 can be helical bevel gears or other types of bevel gears. When the connecting gear 23 and the transmission gear 22 are both bevel gears, the stability of operations of the transmission gear 22 and the connecting gear 23 can be ensured, and the noise can be reduced.

Refer to FIG. 6, when both the connecting gear 23 and the transmission gear 22 are bevel gears, in one embodiment, an axis of motor 21 (referring to FIG. 2) is parallel to the valve rod 12 (referring to FIG. 2). That is, the axis of motor 21 and the valve rod 12 are arranged side by side, and approximately in parallel, so as to reduce the space occupied by the motor 21 in the radial direction of the connecting gear 23, which is conducive to reducing the size of the plug valve 10 in the radial direction of the connecting gear 23, making the structure of the plug valve 10 more compact.

In another embodiment, the axis of the motor 21 intersects the valve rod 12. An included angle between an extending direction of the axis of the motor 21 and an extending direction of the valve rod 12 can be a right angle or an acute angle, with such an arrangement, the motor 21 is installed in the radial direction of the connecting gear 23, so that the occupied space of the motor 21 in a length direction of the valve rod 12 can be reduced, and the size of the plug valve 10 in the length direction of the valve rod 12 is reduced.

Referring to FIG. 5 or FIG. 6, in an embodiment, a diameter of the transmission gear 22 is smaller than a diameter of the connecting gear 23. According to the embodiments of the present application, when the rotating speed of the motor 21 is consistent, the rotating speed of the connecting gear 23 is mainly affected by the number of the transmission tooth sections 222 on the transmission gear 22 and the number of the meshing teeth 223 on each transmission tooth section 222. Therefore, when the number of the transmission tooth sections 222 on the transmission gear 22 and the number of the meshing teeth 223 on each transmission tooth section 222 meet the transmission requirement, the diameter of the transmission gear 22 can be set to be smaller than the diameter of the connecting gear 23, so that the occupied space of the transmission gear 22 can be reduced, and the structural compactness of the plug valve 10 is improved. Of course, in other embodiments, the diameter of the transmission gear 22 and the diameter of the connecting gear 23 can be substantially the same. In addition, the motor 21 can be provided as a speed reduction motor 21.

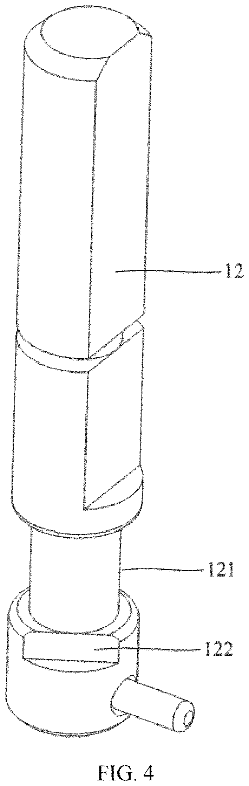

Referring to FIG. 2 and FIG. 4, in an embodiment, the valve rod 12 is movable along its length direction, so as to have an ignition position below. At the ignition position, the valve rod 12 triggers the ignition switch 13. In particular, the valve rod 12 also has a fire-off position above the ignition position. The ignition position and the fire-off position are two positions when the valve rod 12 moves along the length direction of the valve rod 12. When the valve rod 12 is switched between the ignition position and the fire-off position, the valve rod 12 does not rotate. At the ignition position, the valve rod 12 is rotatable. When the valve rod 12 is at the closing gear, the valve rod 12 can be switched between the ignition position and the fire-off position. When the plug valve 10 is started for ignition, the valve rod 12 needs to be pressed down to the ignition position, so that the valve rod 12 triggers the ignition switch 13 to provide an ignition signal to a pulse igniter, so that the pulse igniter is started for ignition. At this time, the valve rod 12 is manually rotated, so that the valve rod 12 rotates from the closing gear to a firepower gear, the valve is opened to let the gas get in, so that the gas stove is ignited.

In an embodiment, when the valve rod 12 is at the fire-off position, the connecting gear 23 and the transmission gear 22 are spaced from each other in the axial direction of the connecting gear 23 (i.e., the length direction of the valve rod 12). When the valve rod 12 rotates to a firepower gear, the connecting gear 23 faces the vacant section 224 of the transmission gear 22, that is, the transmission tooth section 222 can mesh with the connecting gear 23, at this time, if the motor 21 is started to drive the transmission gear 22 to rotate, the transmission tooth section 222 can mesh with the connecting gear 23. When tuning off the fire is needed, the valve rod 12 is rotated to the closing gear to close the valve, and the valve rod 12 can move to the fire-off position, so that the connecting gear 23 and the transmission gear 22 are spaced from each other in the axial direction. Therefore, even if the motor 21 is started when the gas stove is in an off-fire state, the motor 21 and the transmission gear 22 cannot drive the valve rod 12 to rotate, so that the reliability and the safety of the plug valve 10 are greatly improved. Of course, in other embodiments, at either the fire-off position or the ignition position, the transmission tooth section 222 can be engaged with the connecting gear 23.

With reference to FIGS. 2 to 4, in an embodiment, the connecting gear 23 is located at one end of the mounting convex ring 112 on the mounting seat 111 away from the valve body 110. The mounting seat 111 is also provided with a supporting portion 119 protruded along a protruding direction of the mounting convex ring 112. The motor 21 is fixed to one side of the supporting portion 119 facing the valve body 110. The motor 21 is passed through the supporting portion 119. The transmission gear 22 is located on a surface of the supporting portion 119 away from the valve body 110 and engages with the connecting gear 23. In this way, the transmission gear 22 and the connecting gear 23 are substantially in the same plane, which not only ensures that the transmission gear 22 and the connecting gear 23 can be better engaged, but also reduces the length of the rotating shaft of the motor 21, the possibility of bending and deformation of the rotating shaft of the motor 21 during the rotating of the transmission gear 22 is reduced, so that the rotating stability of the connecting gear 23 is better.

In one embodiment, the plug valve 10 further includes a controller and a wireless communication module. The controller is electrically connected to the wireless communication module and the driving mechanism. The wireless communication module is configured for communicating with an external terminal to receive a control instruction from the external terminal, and the controller is configured for controlling the driving mechanism to drive the valve rod 12 to rotate according to the control instruction. In this way, the wireless communication module is in communication with the external terminal to receive the control instruction from the external terminal. After the controller receives the control instruction of the external terminal through the wireless communication module, the driving mechanism can be controlled to drive the valve rod 12 to rotate according to the control instruction, so that the firepower of the gas stove can be adjusted or the gas stove is turned off. That is, when the user needs to adjust the firepower of the gas stove or to turn off the gas stove in the cooking process, the user only needs to send a corresponding control instruction to the gas stove through the external terminal, so that the user does not need to enter the kitchen to operate the gas stove. The user can conveniently adjust the firepower and turn off the fire of the gas stove, and the use convenience of the user is improved. Of course, in other embodiments, a control button can be provided on the gas stove, so that the valve rod 12 can be adjusted through the control button controlling the driving structure, and the valve rod 12 can also be adjusted through the external terminal controlling the driving structure.

In one embodiment, the wireless communication module is a Bluetooth module, a radio frequency module or a WiFi module. Therefore, the power consumption of the gas stove is low, and the power source can be saved.

Referring to FIG. 2, FIG. 4 and FIG. 5, in an embodiment, when the controller receives a fire-off instruction through the wireless communication module or when the cooking program is over and the fire is automatically turned off, the controller controls the motor 21 to drive the valve rod 12 to rotate. When the valve rod 12 rotates to the closing gear, the vacant section 224 faces the connecting gear 23, so that when the transmission gear 22 triggers the controlling switch 15, the transmission gear 22 is in a state that the vacant section 224 faces the connecting gear 23. When the valve rod 12 rotates to the closing gear, the valve rod 12 can move to the fire-off position. Under the driving of the motor 21, when the valve rod 12 rotates to the closing gear, the valve rod 12 triggers the change-over switch 14, so that when the transmission gear 22 triggers the controlling switch 15 again, the motor 21 stops rotating. That is, when the controlling switch 15 is triggered by the transmission gear 22 to generate the trigger signal, the transmission gear 22 is located at a position where the meshing of the transmission tooth section 222 with the connecting gear 23 is ended, and the vacant section 224 faces the connecting gear 23. In other words, when the meshing of the transmission tooth section 222 with the connecting gear 23 is ended, and the connecting gear 23 faces the vacant section 224, the transmission gear 22 triggers the controlling switch 15 to generate the trigger signal.

When a fire-off instruction is sent to the controller through the external terminal or the menu program is over and the fire is automatically turned off, the controller controls the motor 21 to drive the valve rod 12 to rotate towards the closing gear. When the valve rod 12 is rotated to the closing gear, the valve rod 12 can trigger the change-over switch 14, and at the same time the valve rod 12 can be automatically switched to the fire-off position, so that the connecting gear 23 and the transmission gear 22 are spaced from each other in the axial direction of the connecting gear 23. When the valve rod 12 triggers the change-over switch 14, the controller detects a trigger signal of the change-over switch 14, and takes the trigger signal as one of indication signals for controlling the motor 21 to stop rotating. Only After the controller detects that the change-over switch 14 is triggered by the valve rod 12 to generate the trigger signal, and the controller further detects that the controlling switch 15 is triggered by the transmission gear 22 to generate an electrical signal of a trigger signal, the controller controls the motor 21 to stop rotating. Thus, after the gas stove is turned off, it is ensured that the transmission gear 22 is in the state of the vacant section 224 facing the connecting gear 23, so as to ensure that the vacant section 224 of the transmission gear 22 faces the connecting gear 23 when the valve rod 12 is pressed for ignition next time, to avoid the interference between the connecting gear 23 and the transmission tooth section 222 on the transmission gear 22, and improving the reliability of the plug valve 10. Moreover, two functions are realized by using the same change-over switch 14, the number of switches on the plug valve 10 can be reduced, and the structure of the plug valve 10 is simplified. Of course, in other embodiments, another change-over switch 14 can be provided to provide an indication signal for controlling the motor 21 to stop. In some embodiments, another method can be employed to determine that the valve rod 12 has rotated to the closing gear, and provide a trigger signal for the controller to control the motor 21 to stop.

When the change-over switch 14 is a microswitch, the notch 122 on the valve rod 12 can be extended in the circumferential direction of the valve rod 12, and to ensure that when the valve rod 12 rotates to the preset firepower gear, the pressing portion of the change-over switch 14 is located in the notch 122, and when the valve rod 12 rotates to the closing gear, the pressing portion of the change-over switch 14 can also be located in the notch 122. In some embodiments, two notches 122 can be provided on the valve rod 12, when the valve rod 12 rotates to the preset firepower gear, the pressing portion of the change-over switch 14 is located in one of the notches 122, and when the valve rod 12 rotates to the closing gear, the pressing portion of the change-over switch 14 is located in the other notch 122.

Referring to FIG. 2 and FIG. 5, in an embodiment, when the change-over switch 14 is a microswitch, the valve rod 12 is provided with a notch 122, when the valve rod 12 is located either at the minimum firepower gear or at the closing gear, the valve rod 12 is located in the notch 122. When the valve rod 12 is located between the minimum firepower gear and the closing gear, the pressing portion of the change-over switch 14 abuts against a peripheral surface of the valve rod 12, and the change-over switch 14 outputs signals when the valve rod 12 rotates to make the state of the change-over switch 14 changes, and to control the motor 21 to rotate through the controller. In this way, it is possible that only one notch 122 is provided, so that the machining process of the valve rod 12 can be reduced, and the structure of the valve rod 12 can be simplified.

In one embodiment, the plug valve 10 further includes a controller and a temperature sensor. The controller is electrically connected to the temperature sensor and the driving mechanism, the temperature sensor is configured for detecting a temperature of a cooking utensil, and the controller is further configured for controlling the driving mechanism to drive the valve rod 12 to rotate according to the temperature. In some embodiments, in the automatic fire control mode, the controller can control the driving motor 21 to drive the valve rod 12 to rotate according to a preset cooking program, so that the firepower of the gas stove can be automatically adjusted. When the automatic ignition mode is started, the temperature of the cooking utensil can be detected in real time through the temperature sensor, so that the controller can control the driving mechanism to drive the valve rod 12 to the target firepower gear according to the preset program and the temperature, and the precision of the automatic fire control mode of the gas stove can be improved. Of course, in other embodiments, the temperature sensor can be omitted.

The present application further provides a gas stove. The gas stove includes a stove body and a plug valve whose structure can make reference to the above embodiments. For the gas stove adopts all the above embodiments, the gas stove at least has all the beneficial effects brought by the above embodiments, which are not repeated here. The plug valve is arranged on the stove body.

In this embodiment, the valve rod is protruded out from the stove body, and a knob is arranged at a portion of the valve rod out of the stove body. That is, the user can operate the gas stove manually, or through the external terminal. Compared with that the gas stove can only be operated manually, the user can conveniently adjust the firepower of the gas stove, turn off the fire, and the like. The user can adjust the firepower manually, or select the mode of automatically adjusting the firepower, the options for the user to select are increased, and the user can be conveniently switched between various cooking modes.

## Claims

1. A plug valve (10) comprising:
a valve seat (11);
a valve rod (12) mounted on the valve seat (11);
a driving mechanism mounted on the valve seat (11) and connected to the valve rod (12) to drive the valve rod (12); wherein the plug valve (10) has an automatic fire control mode and a manual fire control mode, wherein in the automatic fire control mode, the driving mechanism is controlled to drive the valve rod (12) to rotate to adjust the firepower; and wherein in the manual fire control mode, the valve rod (12) is manually adjusted and rotated; and
**characterized in that** the plug valve (10) comprising
a change-over switch (14) mounted on the valve seat (11) and electrically connected to the driving mechanism,
wherein when the valve rod (12) is rotated to trigger the change-over switch (14), the plug valve (10) is switched to the automatic fire control mode.

2. The plug valve (10) of claim 1, wherein the valve seat (11) comprises a valve body (110) and a mounting seat (111), the valve rod (12) being mounted on the valve body (110), and the change-over switch (14) and the driving mechanism both being mounted on the mounting seat (111).

3. The plug valve (10) of claim 2, wherein the mounting seat (111) is provided with a mounting hole, and wherein the valve rod (12) extends through the mounting hole to be mounted on the valve body (110).

4. The plug valve (10) of claim 3, wherein a mounting convex ring (112) is arranged on a periphery of the mounting hole, and wherein the mounting convex ring (112) is arranged around a periphery of the valve rod (12).

5. The plug valve (10) of claim 4, wherein the mounting convex ring (112) is provided with an avoidance hole (114), and wherein the change-over switch (14) extends into the mounting convex ring (112) via the avoidance hole (114) to cooperate with the valve rod (12).

6. The plug valve (10) of claim 5, wherein the plug valve (10) comprises an ignition switch (13), wherein the mounting convex ring (112) is provided with an avoidance notch (113), the ignition switch (13) extending into the mounting convex ring (112) via the avoidance notch (113) to cooperate with the valve rod (12).

7. The plug valve (10) of claim 6, wherein the avoidance notch (113) and the avoidance hole (114) are distributed on two opposite sides of the mounting convex ring (112); or wherein an outer circumferential ring of the valve rod (12) is provided with a triggering groove (121), the ignition switch (13) is a microswitch, and a pressing portion of the ignition switch (13) extends into the triggering groove (121), the ignition switch (13) is triggered by an upper side wall of the triggering groove (121) in response to the valve rod (12) being pressed downwards; or
the mounting seat (111) is provided with a first limiting groove (115), the change-over switch (14) being arranged in the first limiting groove (115); and optionally
the mounting seat (111) is provided with a second limiting groove (116), the ignition switch (13) being arranged in the second limiting groove (116).

8. The plug valve (10) of any one of claims 1 to 7, wherein the driving mechanism comprises a motor (21) arranged on the mounting seat (111), a transmission gear (22) arranged on a rotating shaft of the motor (21) and a connecting gear (23) arranged on the valve rod (12), the transmission gear (22) is in transmission connection with the connecting gear (23).

9. The plug valve (10) of claim 8, further comprising a controller and a controlling switch (15), wherein the controller is electrically connected to the controlling switch (15) and the motor (21), the controlling switch (15) being mounted on the mounting seat (111), the controlling switch (15) being intermittently triggered by the transmission gear (22) in response to the motor (21) driving the transmission gear (22) to rotate, and the controller calculating a rotation angle of the valve rod (12) according to times of the controlling switch (15) being triggered.

10. The plug valve (10) of claim 9, wherein the transmission gear (22) comprises a gear body (221), a transmission tooth section (222) and a vacant section (224) sequentially arranged in a circumferential direction of the gear body (221), the gear body (221) being connected to the rotating shaft of the motor (21), wherein in the automatic fire control mode, when the motor (21) drives the transmission gear (22) to rotate, the transmission tooth section (222) is intermittently meshed with the connecting gear (23), and wherein in the manual fire control mode, the vacant section (224) faces the connecting gear (23).

11. The plug valve (10) of claim 10, wherein the controlling switch (15) is a microswitch arranged on a peripheral side of the transmission gear (22), wherein when the motor (21) drives the transmission gear (22) to rotate, the controlling switch (15) is intermittently triggered by the transmission tooth section (222).

12. The plug valve (10) of claim 8, wherein the connecting gear (23) is located at an end of the mounting convex ring (112) on the mounting seat (111) away from the valve body (110), wherein the mounting seat (111) is further provided with a supporting portion (119) along a protruding direction of the mounting convex ring (112), the motor (21) being fixed to a side of the supporting portion (119) facing the valve body (110), and the motor (21) extending through the supporting portion (119), and the transmission gear (22) being located on a surface of the supporting portion (119) back to the valve body (110), and meshed with the connecting gear (23).

13. The plug valve (10) of any one of claims 1 to 7 further comprising:
a wireless communication module configured for communicating with an external terminal to receive a control instruction from the external terminal; and
a controller being electrically connected to the wireless communication module and the driving mechanism, and controlling the driving mechanism to drive the valve rod (12) to rotate according to the control instruction.

14. The plug valve (10) of any one of claims 1 to 7 further comprising:
a temperature sensor detecting a temperature of a cooking utensil; and
a controller being electrically connected to the temperature sensor and the driving mechanism, and controlling the driving mechanism to drive the valve rod (12) to rotate according to the temperature of the cooking utensil.

15. A gas stove comprising a stove body and a plug valve (10) of any one of claims 1 to 14, wherein the plug valve (10) is arranged on the stove body.

## Patentansprüche

1. Kegelventil (10), umfassend:
einen Ventilsitz (11);
eine Ventilstange (12), die auf dem Ventilsitz (11) montiert ist;
einen Antriebsmechanismus, der auf dem Ventilsitz (11) montiert und mit der Ventilstange (12) verbunden ist, um die Ventilstange (12) anzutreiben; wobei das Kegelventil (10) einen automatischen Feuersteuerungsmodus und einen manuellen Feuersteuerungsmodus aufweist, wobei im automatischen Feuersteuerungsmodus der Antriebsmechanismus gesteuert wird, um die Ventilstange (12) anzutreiben, sich zu drehen, um die Feuerleistung einzustellen; und wobei im manuellen Feuersteuerungsmodus die Ventilstange (12) manuell eingestellt und gedreht wird; und
**dadurch gekennzeichnet, dass** das Kegelventil (10)
einen Umschalter (14) umfasst, der auf dem Ventilsitz (11) montiert und elektrisch mit dem Antriebsmechanismus verbunden ist,
wobei, wenn die Ventilstange (12) gedreht wird, um den Umschalter (14) auszulösen, das Kegelventil (10) in den automatischen Feuersteuerungsmodus geschaltet wird.

2. Kegelventil (10) gemäß Anspruch 1, wobei der Ventilsitz (11) einen Ventilkörper (110) und einen Montagesitz (111) umfasst, wobei die Ventilstange (12) auf dem Ventilkörper (110) montiert ist und der Umschalter (14) und der Antriebsmechanismus beide auf dem Montagesitz (111) montiert sind.

3. Kegelventil (10) gemäß Anspruch 2, wobei der Montagesitz (111) mit einem Montageloch versehen ist und wobei sich die Ventilstange (12) durch das Montageloch erstreckt, um am Ventilkörper (110) montiert zu werden.

4. Kegelventil (10) gemäß Anspruch 3, wobei ein konvexer Montagering (112) an einem Umfang des Montagelochs angeordnet ist und wobei der konvexe Montagering (112) um einen Umfang der Ventilstange (12) angeordnet ist.

5. Kegelventil (10) gemäß Anspruch 4, wobei der konvexe Montagering (112) mit einem Ausweichloch (114) versehen ist, und wobei der Umschalter (14) über das Ausweichloch (114) in den konvexen Montagering (112) hineinragt, um mit der Ventilstange (12) zusammenzuwirken.

6. Kegelventil (10) gemäß Anspruch 5, wobei das Kegelventil (10) einen Zündschalter (13) umfasst, wobei der konvexe Montagering (112) mit einer Ausweichkerbe (113) versehen ist, wobei sich der Zündschalter (13) über die Ausweichkerbe (113) in den konvexen Montagering (112) erstreckt, um mit der Ventilstange (12) zusammenzuwirken.

7. Kegelventil (10) gemäß Anspruch 6, wobei die Ausweichkerbe (113) und das Ausweichloch (114) auf zwei gegenüberliegenden Seiten des konvexen Montagerings (112) verteilt sind; oder wobei ein äußerer Umfangsring der Ventilstange (12) mit einer Auslösernut (121) versehen ist, der Zündschalter (13) ein Mikroschalter ist und ein Drückbereich des Zündschalters (13) sich in die Auslösernut (121) erstreckt, der Zündschalter (13) durch eine obere Seitenwand der Auslösernut (121) als Reaktion darauf ausgelöst wird, dass die Ventilstange (12) nach unten gedrückt wird; oder
der Montagesitz (111) mit einer ersten Begrenzungsrille (115) versehen ist, wobei der Umschalter (14) in der ersten Begrenzungsrille (115) angeordnet ist; und optional
der Montagesitz (111) mit einer zweiten Begrenzungsrille (116) versehen ist, wobei der Zündschalter (13) in der zweiten Begrenzungsrille (116) angeordnet ist.

8. Kegelventil (10) gemäß einem der Ansprüche 1 bis 7, wobei der Antriebsmechanismus einen auf dem Montagesitz (111) angeordneten Motor (21), ein auf einer Drehwelle des Motors (21) angeordnetes Übertragungszahnrad (22) und ein auf der Ventilstange (12) angeordnetes Verbindungszahnrad (23) umfasst, wobei das Übertragungszahnrad (22) in Getriebeverbindung mit dem Verbindungszahnrad (23) steht.

9. Kegelventil (10) gemäß Anspruch 8, ferner umfassend eine Steuerung und einen Steuerschalter (15), wobei die Steuerung elektrisch mit dem Steuerschalter (15) und dem Motor (21) verbunden ist, wobei der Steuerschalter (15) an dem Montagesitz (111) montiert ist, wobei der Steuerschalter (15) intermittierend durch das Übertragungszahnrad (22) in Reaktion auf den Motor (21), der das Übertragungszahnrad (22) antreibt, sich zu drehen, ausgelöst wird, und wobei die Steuerung einen Drehwinkel der Ventilstange (12) in Abhängigkeit von den Zeiten berechnet, in denen der Steuerschalter (15) ausgelöst wird.

10. Kegelventil (10) gemäß Anspruch 9, wobei das Übertragungszahnrad (22) einen Zahnradkörper (221), einen Übertragungszahnabschnitt (222) und einen freien Abschnitt (224) umfasst, die aufeinanderfolgend in einer Umfangsrichtung des Zahnradkörpers (221) angeordnet sind, wobei der Zahnradkörper (221) mit der Drehwelle des Motors (21) verbunden ist, wobei im automatischen Feuersteuerungsmodus, wenn der Motor (21) das Übertragungszahnrad (22) zur Drehung antreibt, der Übertragungszahnabschnitt (222) intermittierend mit dem Verbindungszahnrad (23) in Eingriff steht, und wobei im manuellen Feuersteuerungsmodus der freie Abschnitt (224) dem Verbindungszahnrad (23) zugewandt ist.

11. Kegelventil (10) gemäß Anspruch 10, wobei der Steuerschalter (15) ein Mikroschalter ist, der an einer Umfangsseite des Übertragungszahnrads (22) angeordnet ist, wobei, wenn der Motor (21) das Übertragungszahnrad (22) antreibt, sich zu drehen, der Steuerschalter (15) intermittierend von dem Übertragungszahnabschnitt (222) ausgelöst wird.

12. Kegelventil (10) gemäß Anspruch 8, wobei sich das Verbindungszahnrad (23) an einem Ende des konvexen Montagerings (112) auf dem Montagesitz (111) entfernt vom Ventilkörper (110) befindet, wobei der Montagesitz (111) ferner mit einem Stützbereich (119) entlang einer vorstehenden Richtung des konvexen Montagerings (112) versehen ist, der Motor (21) an einer Seite des Stützbereichs (119) befestigt ist, die dem Ventilkörper (110) zugewandt ist, und der Motor (21) sich durch den Stützbereich (119) erstreckt, und sich das Übertragungszahnrad (22) an einer Fläche des Stützbereichs (119) auf der Rückseite des Ventilkörpers (110) befindet und mit dem Verbindungszahnrad (23) in Eingriff steht.

13. Kegelventil (10) gemäß einem der Ansprüche 1 bis 7 ferner umfassend:
ein drahtloses Kommunikationsmodul, das für die Kommunikation mit einem externen Endgerät konfiguriert ist, um einen Steuerbefehl von dem externen Endgerät zu empfangen; und
eine Steuerung, die elektrisch mit dem drahtlosen Kommunikationsmodul und dem Antriebsmechanismus verbunden ist und den Antriebsmechanismus steuert, um die Ventilstange (12) gemäß dem Steuerbefehl zu drehen.

14. Kegelventil (10) gemäß einem der Ansprüche 1 bis 7 ferner umfassend:
einen Temperatursensor, der die Temperatur eines Kochgeschirrs erfasst; und
eine Steuerung, die elektrisch mit dem Temperatursensor und dem Antriebsmechanismus verbunden ist und den Antriebsmechanismus steuert, um die Ventilstange (12) gemäß der Temperatur des Kochgeschirrs zu drehen.

15. Gasherd umfassend einen Herdkörper und ein Kegelventil (10) gemäß einem der Ansprüche 1 bis 14, wobei das Kegelventil (10) am Herdkörper angeordnet ist.

## Revendications

1. Vanne à boisseau (10) comprenant :
un siège de vanne ;
une tige de vanne (12) montée sur le siège de vanne (11) ;
un mécanisme d'entraînement monté sur le siège de vanne (11) et relié à la tige de vanne (12) pour entraîner la tige de vanne (12) ; dans laquelle la vanne à boisseau (10) présente un mode de commande de feu automatique et un mode de commande de feu manuelle, dans laquelle, dans le mode de commande de feu automatique, le mécanisme d'entraînement est commandé pour entraîner la tige de vanne (12) à tourner pour ajuster la puissance du feu ; et dans laquelle, dans le mode de commande de feu manuelle, la tige de vanne (12) est ajustée et tournée manuellement ;
**caractérisée en ce que** la vanne à boisseau (10) comprend
un commutateur de transfert (14) monté sur le siège de vanne (11) et raccordé électriquement au mécanisme d'entraînement,
dans laquelle, lorsque la tige de vanne (12) est tournée pour déclencher le commutateur de transfert (14), la vanne à boisseau (10) est commutée dans le mode de commande de feu automatique.

2. Vanne à boisseau (10) selon la revendication 1, dans laquelle le siège de vanne (11) comprend un corps de vanne (110) et un siège de montage (111), la tige de vanne (12) étant montée sur le corps de vanne (110), et le commutateur de transfert (14) et le mécanisme d'entraînement étant tous deux montés sur le siège de montage (111).

3. Vanne à boisseau (10) selon la revendication 2, dans laquelle le siège de montage (111) est pourvu d'un trou de montage, et dans laquelle la tige de vanne (12) s'étend à travers le trou de montage pour être montée sur le corps de vanne (110).

4. Vanne à boisseau (10) selon la revendication 3, dans laquelle une bague convexe de montage (112) est disposée sur une périphérie du trou de montage, et dans laquelle la bague convexe de montage (112) est disposée autour d'une périphérie de la tige de vanne (12).

5. Vanne à boisseau (10) selon la revendication 4, dans laquelle la bague convexe de montage (112) est pourvue d'un trou d'évitement (114), et dans laquelle le commutateur de transfert (14) s'étend dans la bague convexe de montage (112) par l'intermédiaire du trou d'évitement (114) pour coopérer avec la tige de vanne (12).

6. Vanne à boisseau (10) selon la revendication 5, dans laquelle la vanne à boisseau (10) comprend un commutateur d'allumage (13), dans laquelle la bague convexe de montage (112) est pourvue d'une encoche d'évitement (113), le commutateur d'allumage (13) s'étendant dans la bague convexe de montage (112) par l'intermédiaire de l'encoche d'évitement (113) pour coopérer avec la tige de vanne (12).

7. Vanne à boisseau (10) selon la revendication 6, dans laquelle l'encoche d'évitement (113) et le trou d'évitement (114) sont répartis sur deux côtés opposés de la bague convexe de montage (112) ; ou dans laquelle une bague circonférentielle extérieure de la tige de vanne (12) est pourvue d'une rainure de déclenchement (121), le commutateur d'allumage (13) est un microrupteur, et une partie de pression du commutateur d'allumage (13) s'étend dans la rainure de déclenchement (121), le commutateur d'allumage (13) est déclenché par une paroi latérale supérieure de la rainure de déclenchement (121) en réponse à la pression vers le bas la tige de vanne (12) ; ou
le siège de montage (111) est pourvu d'une première rainure de limitation (115), le commutateur de transfert (14) étant disposé dans la première rainure de limitation (115) ; et en option
le siège de montage (111) est pourvu d'une deuxième rainure de limitation (116), le commutateur d'allumage (13) étant disposé dans la deuxième rainure de limitation (116).

8. Vanne à boisseau (10) selon l'une quelconque des revendications 1 à 7, dans laquelle le mécanisme d'entraînement comprend un moteur (21) disposé sur le siège de montage (111), un engrenage de transmission (22) disposé sur un arbre de rotation du moteur (21) et un engrenage de raccordement (23) disposé sur la tige de vanne (12), l'engrenage de transmission (22) est en raccordement de transmission avec l'engrenage de raccordement (23).

9. Vanne à boisseau (10) selon la revendication 8, comprenant en outre un dispositif de commande et un commutateur de commande (15), dans laquelle le dispositif de commande est raccordé électriquement au commutateur de commande (15) et au moteur (21), le commutateur de commande (15) étant monté sur le siège de montage (111), le commutateur de commande (15) étant déclenché par intermittence par l'engrenage de transmission (22) en réponse à l'entraînement en rotation de l'engrenage de transmission (22) par le moteur (21), et le dispositif de commande calculant un angle de rotation de la tige de vanne (12) en fonction des moments où le commutateur de commande (15) est déclenché.

10. Vanne à boisseau (10) selon la revendication 9, dans laquelle l'engrenage de transmission (22) comprend un corps d'engrenage (221), une section dentée de transmission (222) et une section vacante (224) disposées de manière séquentielle dans une direction circonférentielle du corps d'engrenage (221), le corps d'engrenage (221) étant relié à l'arbre de rotation du moteur (21), dans laquelle, dans le mode de commande de feu automatique, lorsque le moteur (21) entraîne en rotation l'engrenage de transmission (22), la section dentée de transmission (222) est engrenée de manière intermittente avec l'engrenage de raccordement (23), et dans laquelle, dans le mode de commande de feu manuelle, la section vacante (224) fait face à l'engrenage de raccordement (23).

11. Vanne à boisseau (10) selon la revendication 10, dans laquelle le commutateur de commande (15) est un microrupteur disposé sur un côté périphérique de l'engrenage de transmission (22), dans laquelle lorsque le moteur (21) entraîne en rotation l'engrenage de transmission (22), le commutateur de commande (15) est déclenché par intermittence par la section dentée de transmission (222).

12. Vanne à boisseau (10) selon la revendication 8,
dans laquelle l'engrenage de raccordement (23) est situé sur une extrémité de la bague convexe de montage (112) sur le siège de montage (111) à distance du corps de valve (110), dans laquelle le siège de montage (111) est en outre pourvu d'une partie de support (119) le long d'une direction de saillie de la bague convexe de montage (112), le moteur (21) étant fixé sur un côté de la partie de support (119) faisant face au corps de vanne (110), et le moteur (21) s'étendant à travers la partie de support (119), et l'engrenage de transmission (22) étant situé sur une surface de la partie de support (119) revenant vers le corps de vanne (110), et engrené avec l'engrenage de raccordement (23).

13. Vanne à boisseau (10) selon l'une quelconque des revendications 1 à 7, comprenant en outre :
un module de communication sans fil configuré pour communiquer avec un terminal externe pour recevoir une instruction de commande du terminal externe ; et
un dispositif de commande raccordé électriquement au module de communication sans fil et au mécanisme d'entraînement, et commandant le mécanisme d'entraînement pour entraîner en rotation la tige de vanne (12) en fonction de l'instruction de commande.

14. Vanne à boisseau (10) selon l'une quelconque des revendications 1 à 7, comprenant en outre :
un capteur de température détectant une température d'un ustensile de cuisson ; et
un dispositif de commande raccordé électriquement au capteur de température et au mécanisme d'entraînement, et commandant le mécanisme d'entraînement pour entraîner en rotation la tige de vanne (12) en fonction de la température de l'ustensile de cuisson.

15. Cuisinière à gaz comprenant un corps de cuisinière et une vanne à boisseau (10) selon l'une quelconque des revendications 1 à 14, dans laquelle la vanne à boisseau (10) est disposée sur le corps de cuisinière.
